# EUROPEAN PATENT APPLICATION

(11) **EP 3 249 740 A1**
(43) Date of publication of application: **29.11.2017**
(21) Application number: 16740293.2
(22) Date of filing: 22.01.2016
(51) Int. Cl.: H01M 10/6566, H01G 11/10, H01G 11/18, H01M 2/10, H01M 10/613, H01M 10/627, H01M 10/643, H01M 10/651, H01M 10/6557, H01M 10/6563

(54) **POWER STORAGE UNIT**

(30) Priority: 23.01.2015 JP 2015011197
(71) Applicant: Hitachi Chemical Company, Ltd., Chiyoda-ku Tokyo 100-6606 (JP)
(72) Inventor: UCHIDA, Yusuke, Tokyo 100-6606 (JP); KUGINO, Satoshi, Tokyo 100-6606 (JP); KANEMITSU, Seiji, Tokyo 100-6606 (JP); TANAKA, Akira, Tokyo 100-6606 (JP)
(74) Representative: Hoffmann Eitle
(86) International application number: PCT/JP2016/051864
(87) International publication number: WO 2016/117686

(57) **Abstract**

An electric storage unit 10 has a downside electric storage cell group 13b and a upside electric storage cell group 13a, and the electric storage cell groups 13a and 13b are incorporated in a unit case 11. The electric storage cells 12 in the downside electric storage cell group 13b are held by a cell holder 32 of a bottom cap 12 and a cell holder 41 of a mid frame 22, and the electric storage cells 12 in the upside electric storage cell group 13a are held by a cell holder 36 of a top cap 23 and the cell holder 41 of the mid frame 22. Cooling air flows in a downside cold-air path 53b from a cold-air inflow port 51b, flows in an upside cold-air path 53a from a cold-air inflow port 51a, and flows in a middle cold-air path 53c from a cold-air inflow port 51 c.

## Description

### TECHNICAL FIELD

The present invention relates to an electric storage unit, which is assembled by incorporating a plurality of electric storage cells in a unit case and configures an electric storage system for storing power.

### BACKGROUND ART

Developed has been an electric storage system for storing power and supplying the stored power outside. When the electric storage system is used for a factory or an office building, the power can be backed up at a peak period of power consumption, and an electric storage cell(s) can be charged in a period of little power consumption. In addition, the electric storage system is used also for stably utilizing distributed renewable energy such as wind power generation or solar power generation while a power demand balance is maintained.

The electric storage system for storing the power has many electric storage cells each comprising a lithium-ion secondary battery, and a lithium-ion capacitor, etc. The plurality of electric storage cells are incorporated in the unit case, and thereby one set of electric storage pack, namely, electric storage unit is assembled by the electric storage cells and the unit case. The electric storage units are incorporated in multi-stage in a casing, namely, in an electric storage rack in which a plurality of shelf plates are provided up and down in spaced intervals. A plurality of electric storage racks each incorporating the electric storage unit are arranged in a power source room, and thereby the electric storage system is formed.

Patent Document 1 discloses a battery unit board so as to arrange a plurality of battery units in a casing in multi-stage.

### RELATED ART DOCUMENTS

### PATENT DOCUMENTS

Patent Document 1: Japanese Patent Application Laid-Open No. 2013-196908

### SUMMARY OF THE INVENTION

### PROBLEMS TO BE SOLVED BY THE INVENTION

As disclosed in above Patent Document 1, in such a configuration as to arrange the battery units into the casing in multi-stage, an air supply port is provided in a front wall of the casing, and cooling air is generated in the casing by a cooling fan mounted on the casing. The generated cooling air flows from a front side to a back side in a unit case, and battery cells, namely, electric storage cells are cooled.

Since the electric storage unit for forming the electric storage system is continuously used over a long period of time, heat dissipation as well as high reliability about the electric storage cells are demanded.

A purpose of the present invention is to enhance the reliability of the electric storage unit.

### MEANS FOR SOLVING THE PROBLEMS

An electric storage unit of the present invention including a plurality of electric storage cells each having a cylindrical shape, the electric storage unit comprises: a downside electric storage cell group configured by the plurality of electric storage cells mutually placed in parallel via a gap; a bottom cap provided with a downside cell holder that holds both end portions of each of the electric storage cells in the downside electric storage cell group; an upside electric storage cell group configured by the electric storage cells mutually placed in parallel via a gap; a top cap provided with an upside cell holder that holds both end portions of each of the electric storage cells in the upside electric storage cell group; a mid frame provided with a middle cell holder that clamps the electric storage cells in the downside electric storage cell group with the downside cell holder and clamps the electric storage cells in the upside electric storage cell group with the upside cell holder; and a front plate provided at a front of a case body formed by the bottom cap, the top cap, and the mid frame, in which the front plate is provided with: a downside cold-air inflow port opposing a downside cold-air path between the bottom cap and the downside electric storage cell group; an upside cold-air inflow port opposing an upside cold-air path between the top can and the upside electric storage cell group; and a middle cold-air inflow port opposing a middle cold-air path between the upside electric storage cell group and the downside electric storage cell group.

### EFFECTS OF THE INVENTION

The electric storage unit has a downside electric storage cell group and a upside electric storage cell group each configured by a plurality of electric storage cells placed via respective gaps, the electric storage cells in the downside electric storage cell group are held by a cell holder of a bottom cap and a cell holder of a mid frame, and the electric storage cells in the upside electric storage cell group are held by a cell holder of a top cap and the cell holder of the mid frame. Cooling air flows in a downside cold-air path from a cold-air inflow port, flows in an upside cold-air path from a cold-air inflow port, and flows in a middle cold-air path from a cold-air inflow port. By this, heat dissipation of the electric storage unit is improved, and reliability of the electric storage unit can be enhanced.

### BRIEF DESCRIPTIONS OF THE DRAWINGS

FIG 1 is a front-side perspective view showing an appearance of an electric storage unit;
FIG 2 is a back-side perspective view showing the appearance of the electric storage unit;
FIG 3 is an exploded perspective view of a unit case configuring the electric storage unit;
FIG 4 is a perspective view showing a bottom cap of the unit case;
FIG 5 is a perspective view showing a mid frame in the unit case;
FIG 6 is a perspective view showing a top cap of the unit case;

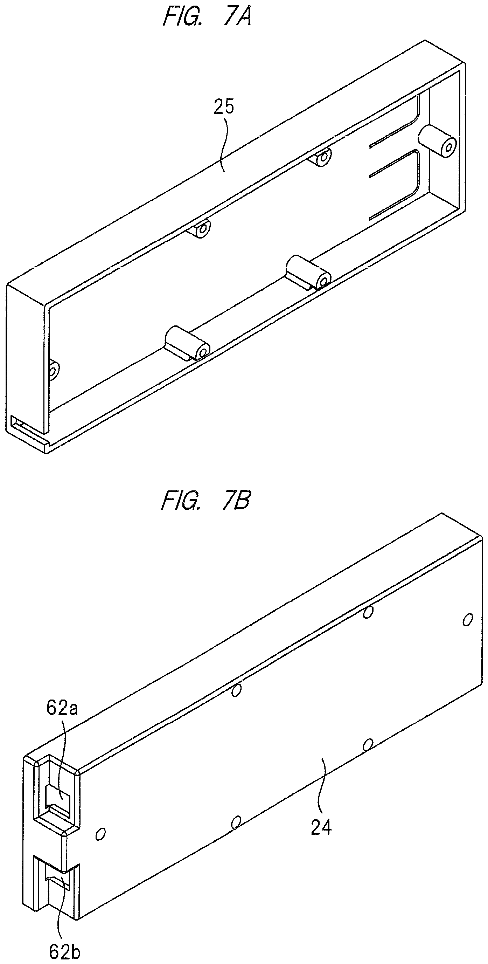

FIG 7(A) is a perspective view showing an interior surface of one side plate of the unit case, and FIG 7(B) is a perspective view showing an exterior surface of the other side plate of the unit case;

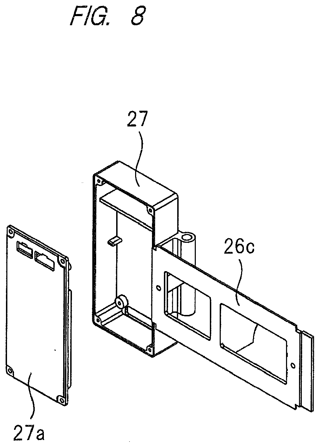

FIG 8 is a perspective view showing a control box provided to a front of the unit case;
FIG 9 is a front view showing a cold-air inflow port formed in a front plate of the unit case;
FIG 10 is a front view showing a cold-air outflow port formed in a back plate of the unit case;
FIG 11 is a perspective view in which an electric storage cell group having a plurality of electric storage cells and incorporated in the unit case is viewed from an output terminal side;
FIG 12 is a perspective view in which the electric storage cell group is viewed from a side opposite to FIG 11;
FIG 13 is a longitudinal sectional view of the electric storage unit showing flows of cooling air in the unit case;
FIG 14(A) is a plan view showing the upside electric storage cell group illustrated in FIG 12, and FIG 14(B) is a plan view showing the downside electric storage cell group;
FIG 15 is a wiring diagram showing a connection state of detection wirings provided in the electric storage cell groups;
FIG 16 is a front view of the electric storage cell groups showing the detection wirings creeping around on an input terminal side of the electric storage cell groups;
FIG 17 is a front view of the electric storage cell groups showing the detection wirings creeping around in the electric storage cell groups on a side opposite to FIG 16;
FIG 18 is a perspective view showing detection wirings of a temperature detection sensor, the detection wirings creeping around in a mid frame;
FIG 19 is a front view of the mid frame showing a state in which the detection wirings of the temperature detection sensor are attached to the mid frame;
FIG 20 is a block diagram showing a control circuit in which voltage detection lines and temperature detection lines are connected;
FIG 21(A) is a sectional view showing an end portion of one of the electric storage cells attached to the unit case, and FIG 21(B) is an enlarged perspective view of an A portion in FIG. 21(A); and
FIG 22(A) is an enlarged front view showing a back end portion in an internal surface of a side plate, and FIG 22(B) is a sectional view taken along B-B line of FIG 22(A).

### DETAILED DESCRIPTION OF PREFERRED EMBODIMENTS

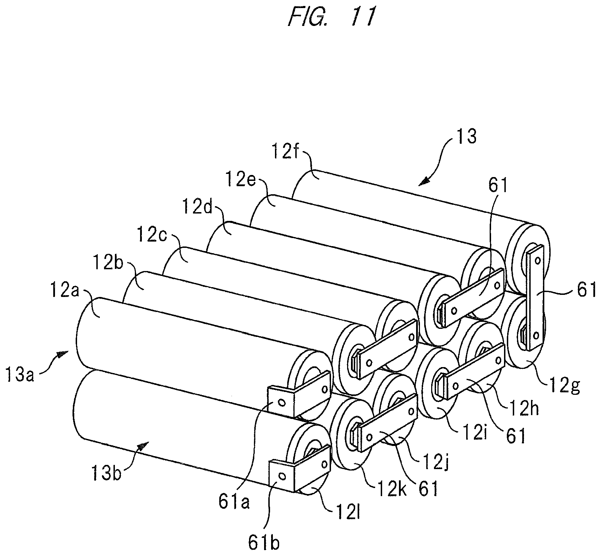

An embodiment of the present invention will be detailed below based on Figures. An electric storage pack, namely, an electric storage unit 10 has a unit case 11 with an approximately rectangular parallelepiped shape, and an electric storage cell group 13 having twelve electric storage cells 12a to 121 is incorporated in the unit case 11 as shown in FIG 11. Each of the electric storage cells 12 is a lithium-ion secondary battery, and is formed into a cylindrical shape. The electric storage cell group 13 comprises: an upside electric storage cell group 13a configured by six electric storage cells 12a to 12f; and a downside electric storage cell group 13b configured by six electric storage cells 12g to 121, and the electric storage cells 12 are attached up and down in two-stage in the unit case 11.

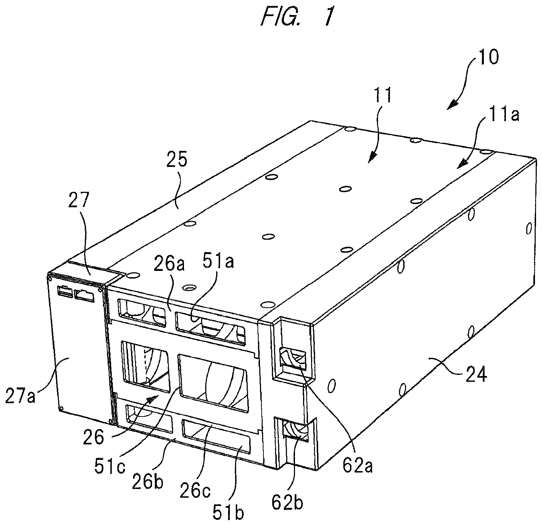

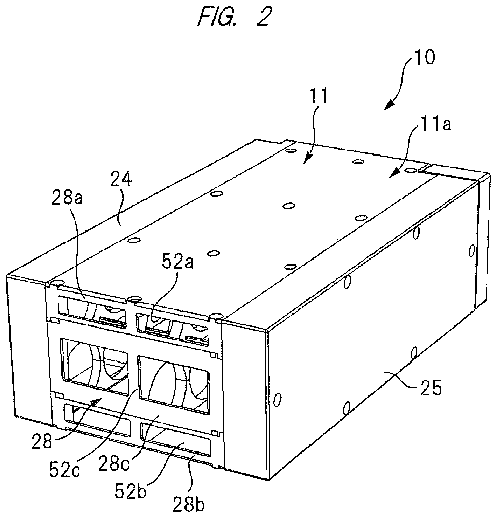

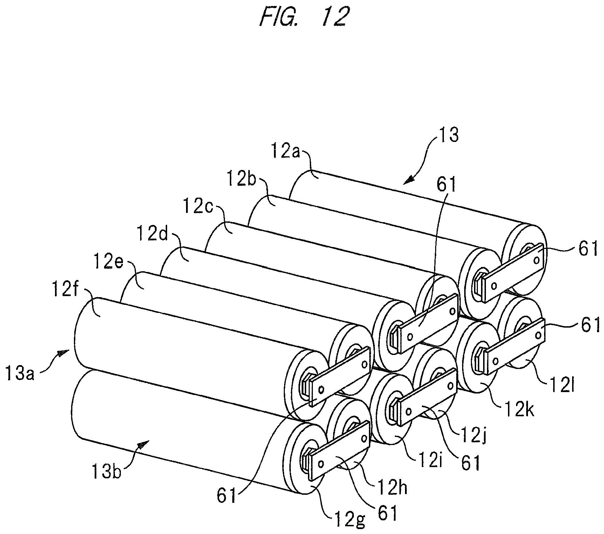

As shown in FIGS. 11 and 12, symbols "a" to "f" are accompanied to the electric storage cells 12, which configures the upside electric storage cell group 13a, from the electric storage cell 12 placed on a front surface side of the unit case 11 to the electric storage cell 12 placed on a back surface side thereof FIG 1 shows the front surface side of the unit case 11, and FIG 2 shows the back surface side of the unit case 11. Meanwhile, symbols "g" to "l" are accompanied to the electric storage cells 12, which configures the downside electric storage cell group 13b, from the electric storage cell 12 placed on the back surface side of the unit case 11 to the electric storage cell 12 placed on the front surface side thereof The respective electric storage cell groups 13a and 13b are configured so that the electric storage cells 12 are mutually arranged in parallel across a gap. The electric storage cells in the upside electric cell group 13a and the downside electric storage cell group 13b are placed in parallel so as to overlap up and down across the gap. In this specification, the electric storage cells placed at specific locations will be described by accompanying the symbols "a" to "l" thereto if indicated.

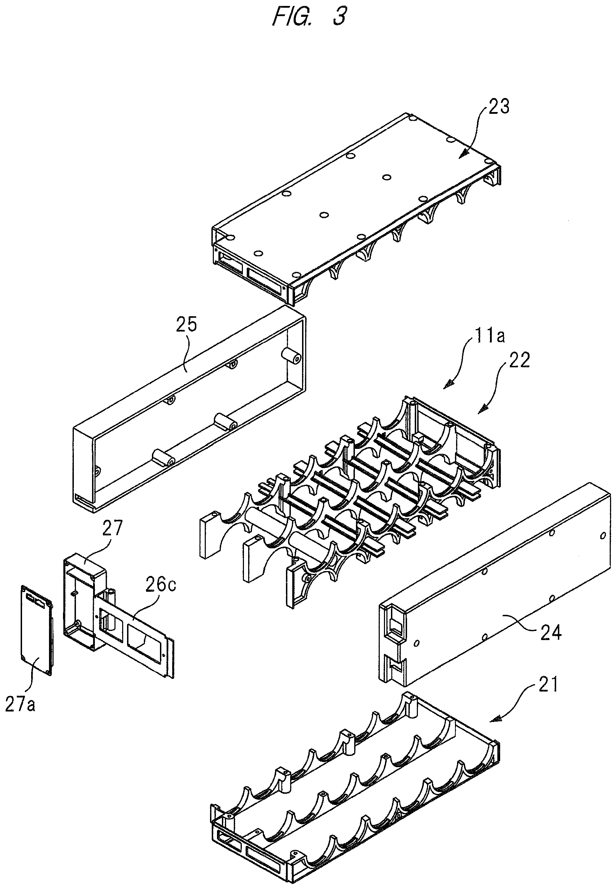

As shown in FIG 3, the unit case 11 has a rectangular bottom cap 21, a mid frame 22 is attached to the bottom cap 21, and a top cap 23 is attached to the mid frame 22. A case body 11a having a framework structure, in which all of the electric storage cells 12 are mutually accommodated across a gap, is configured by the bottom cap 21, the mid frame 22, and the upper cap 23. A side plate 24 is attached on one side of this case body 11a, and a side plate 25 is attached on the other side thereof

As shown in FIG 1, a front plate 26 is attached on a front side of the case body 11a, and the front plate 26 is formed by upper and lower vent frames 26a and 26b and a center vent frame 26c. A control box 27 is provided right near the side plate 25 on the front side of the case body 11 a, and the control box 27 is covered with a cover 27a. As shown in FIG 2, a back plate 28 is attached on a back side of the cover body 11a, and the back plate 28 is formed by upper and lower vent frames 28a and 28b and a center vent frame 28c.

The electric storage unit 10 includes: the unit case 11 assembled by the members as shown in FIG 3; and the plurality of electric storage cells 12 incorporated inside it. The electric storage system is configured by arranging the plurality of the electric storage units 10 in the electric storage rack in multi-stage. "Upper and lower" and "front and back" of the electric storage unit 10 indicate positions and directions in such a state that the electric storage unit 10 is arranged in the electric storage rack. The electric storage unit 10 is arranged on a shelf plate by causing the front side, namely, the front plate 26 to oppose a front of the electric storage rack.

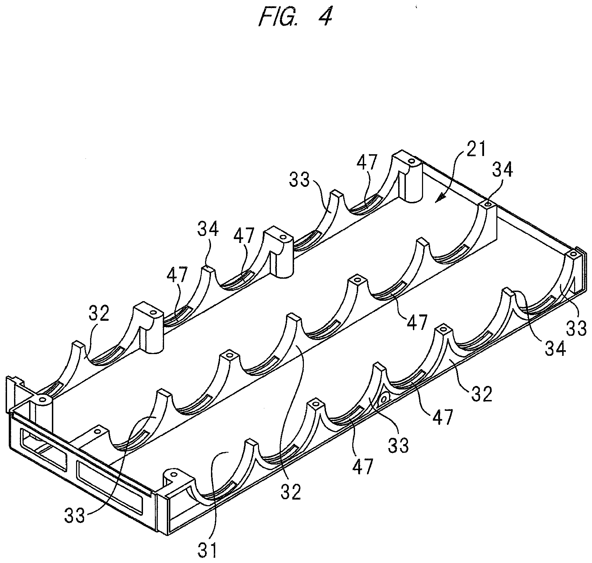

The bottom cap 21 is integrally molded by a resin and, as shown in FIG 4, has: a bottom wall 31; and three downside cell holders 32 extending longitudinally on its interior surface. The cell holders 32 protrude from the bottom wall 31 and are provided along right and left side portions of the bottom wall 31 and along a width-direction center portion of the bottom wall 31. Six concave surfaces 33 each having an approximately semicircle are formed at each of the cell holders 32 correspondingly to the six electric storage cells 12g to 121 configuring the downside electric storage cell group 13b, and the electric storage cells 12g to 121 are held by the downside cell holder 32 in such a state that downside semicircle portions at both end portions and a center portion of each of the electric storage cells 12 bite into the concave surfaces 33. Abutment surfaces 34 are each provided between the longitudinal adjacent concave surfaces 33.

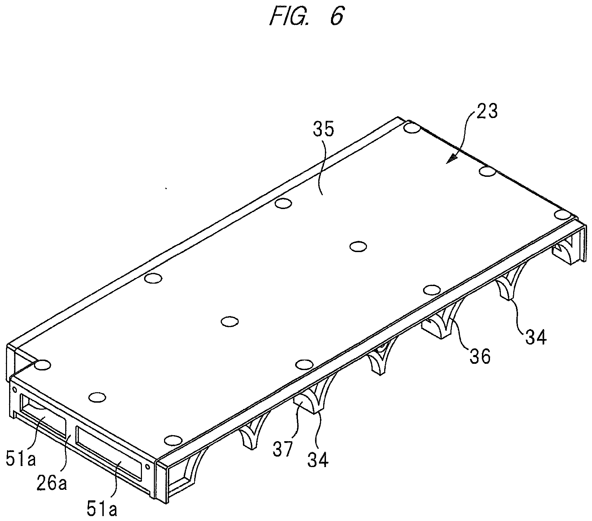

As shown in FIG 6, the top cap 23 has: an upper wall 35; and an upside cell holder 36 extending longitudinally on its interior surface. The three cell holders 36 are provided correspondingly to the cell holders 32 of the bottom cap 21, and the top cap 23 is also molded integrally by a resin. Six concave surfaces 37 each having a semicircle shape are formed at each of the cell holders 36 correspondingly to the six electric storage cells 12a to 12f configuring the upside electric storage cell group 13a, and each of the electric storage cells 12a to 12f is covered with the cell holder 36 in such a state that upside semicircle portions at both end portions and a center portion bite into the concave surfaces 37. Abutment surfaces 34 are each provided between the longitudinally adjacent concave surfaces 37.

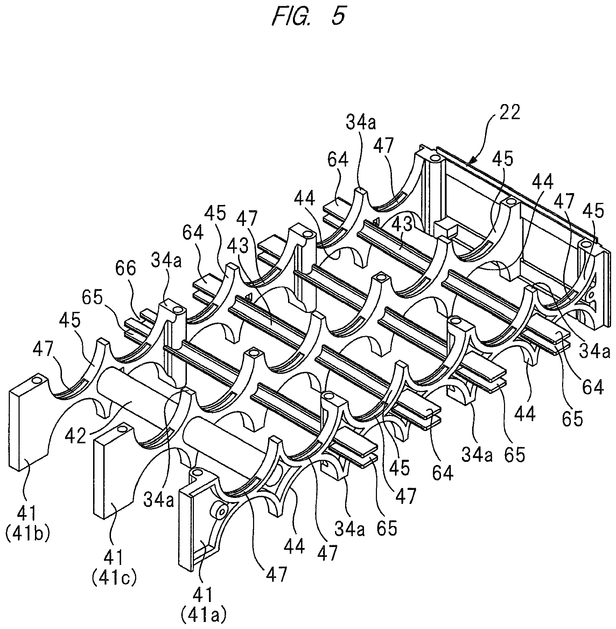

As shown in FIG 5, the mid frame 22 has three middle cell holders 41 extending in parallel to each other, and the cell holders 41 are respectively sandwiched between the downside cell holders provided on the bottom cap 21 and the upside cell holders 36 provided on the top cap 23. The cell holders 41 are integrally linked by: a wiring guide tube (wiring guide portion) 42 extending in a lateral direction, namely, in a direction of traversing the case body; and four air guides 43. The wiring guide tube 42 is provided right near the front side of the unit case 11.

Here, the wiring guide tube will be described. As shown in FIG 5, the wiring guide tube 42 is joined to: a middle cell holder 41a arranged at one end in a direction of traversing the above case body (in a longitudinal direction of the electric storage cell 12); a middle cell holder 41b arranged at the other end on its opposite side; and a middle cell holder 41 c arranged at an approximately center position. Namely, the wiring guide tube 42 is joined to the three middle cell holders 41. The wiring guide tube 42 has, for example, a cylindrical hollow structure, and a plurality of wirings such as a voltage detection wiring and a temperature detection wiring as described below can be accommodated in its hollow portion. That is, the plurality of wirings can be passed in the hollow portion of the wiring guide tube 42. More specifically, in a structure as shown in FIG 5, the middle cell holders 41 have the cell holders 41a, 41b, and 41c as three portions contacting with the electric storage cells 12, and the hollow structure is formed from one end portion (cell holder 41a) in the direction of traversing the above case body (in the longitudinal direction of the electric storage cell 12) to the other end portion (cell holder 41b) on opposite side thereto. Accordingly, an area between an exterior side of one end and an exterior side of the other end on its opposite side penetrates for the hollow structure of the wiring guide tube 42. An outline of the wiring guide tube 42 has been described as a circular form, but may be such a shape as not to prevent a flow of cooling air, for example, a rhombus etc.

The wiring guide tube 42 is formed integrally with the middle cell holders 41, and so rigidity of the mid frame 22 as shown in FIG. 5 can be enhanced

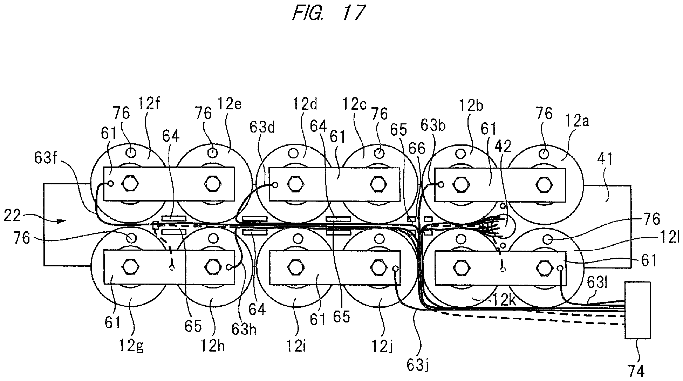

In addition, a plurality of regions (a region corresponding to a space in which air guides as described below are provided), which are formed among the four electric storage cells 12 adjacent to one another forth and back and up and down in the two cell holders 41 (41a and 41b) arranged at the above both ends, are alongside provided in the two cell holders 41 (41a and 41b) arranged at the above both ends. As shown in FIG. 17, the wiring guide tube 42 is provided at the closest region to a controller (control unit) 74 out of those plural regions. In other words, the wiring guide tube 42 is provided right near the front side of the unit case 11 shown in FIG 11 as described above.

This can make a distance from the wiring guide tube 42 to the controller 74 short, so that the distance at a location with the most number of wirings can be shortened, and a gathering degree of the plurality of wirings at a location with the large number of wirings can be improved. That is, the region from the wiring guide tube 42 to the controller 74 is a region for joining with and drawing around the plurality of wirings derived sequentially from the wiring guide tube 42 and the other wirings, and so the wiring is necessarily large in number. Therefore, by shortening the distance of this region in which the wiring is necessarily large in number, scattering of the respective wirings can be reduced, and the gathering degree of the plurality of wirings can be improved.

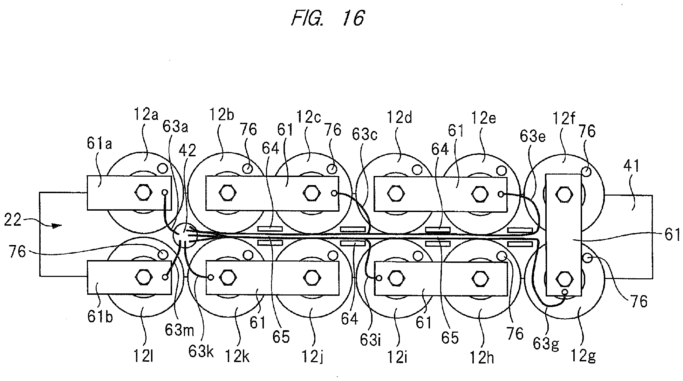

In addition, as shown in FIGS. 16 and 17, the wiring guide tube 42 is provided at a position sandwiched between the upside electric storage cell group 13a and the downside electric storage cell group 13b. For this reason, regardless of whether the wirings are derived sequentially from the upside electric storage cell group 13a or the downside electric storage cell group 13b, both wirings can enter the wiring guide tube 42 along with almost the same length, and enter the wiring guide tube 42 by gathering the plurality of wirings derived from up and down without waste, or be taken out from the wiring guide tube 42. In other words, a degree of freedom of drawing-around of the wirings can be improved.

As shown in FIGS. 16 and 17, the wiring guide tube 42 is provided at such a position as not to overlap each of a plurality of bus bars in a side view in which the side plates 24 and 25 of the electric storage unit 10 are removed (an eyesight viewed from a side-surface direction). By this, the plurality of wirings passing through the wiring guide tube 42 are respectively drawn around without contacting with the plurality of bus bars, and so damages due to the contact with the bus bars by the plurality of wirings can be reduced.

As shown in FIG 5, six concave surfaces 44 each having an almost semicircle shape are formed on a lower surface of each of the cell holders 41 correspondingly to the six electric storage cells 12g to 121 configuring the downside electric storage cell group 13b, and the respective electric storage cells 12g to 121 are clamped between the cell holder 41 and the cell holder 32 in such a state that upside semicircle portions of both end portions and a center portion enter the concave surfaces 44. An abutment surface 34a is provided between the longitudinally adjacent concave surfaces 44 correspondingly to an abutment surface 34 of the bottom cap 21, and since both of the abutment surfaces 34 and 34a become abutted sates, the respective electric storage cells 12g to 121 are held in such a state as to be clamped, namely, sandwiched between the bottom cap 21 and the mid frame 22.

Six concave surfaces 45 each having an almost semicircle shape are formed on the respective cell holders 41 correspondingly to the six electric storage cells 12a to 12f configuring the upside electric storage cell group 13a, and the respective electric storage cells 12a to 12f are clamped between the cell holder 41 and the cell holder 36 in such a state that the downside semicircle portions of the both end portions and the center portion enter the concave surfaces 45. The abutment surface 34a is provided between the longitudinally adjacent concave surfaces 45 correspondingly to the abutment surface 23 of the top cap 23, and the respective electric storage cells 12a to 12f are clamped between the top cap 23 and the mid frame 22 since both of the abutment surfaces 34 and 34a become abutted states.

Like this, the six cylindrical electric storage cells 12 configuring the downside electric storage cell group 13b shown in FIGS. 11 and 12 are incorporated in the case body 11a in such a state that the both end portions and the center portion are clamped by the downside cell holder 32 provided to the bottom cap 21 and the middle cell holder 41 provided to the mid frame 22. The six electric storage cells 12 configuring the upside electric storage cell group 13a are incorporated in the case body 11 in such a state that the both end portions and the center portion are clamped by the upside cell holder 36 provided to the top cap 23 and the middle cell holder 41 provided to the mid frame 22. Incidentally, the both end portions of each of the electric storage cells 12 configure right and left side surface portions as the electric storage cell group 13 formed by all of the electric storage cells 12. Under such a state that all of the electric storage cells 12 are accommodated in the case body 11a, the bottom cap 21 is fastened to a lower side of the mid frame 22 by a not-shown screw member(s), and the top cap 23 is fastened to an upper side of the mid frame 22. The side plates 24 and 25 are fastened to both sides of the case body 11a by a not-shown screw member(s).

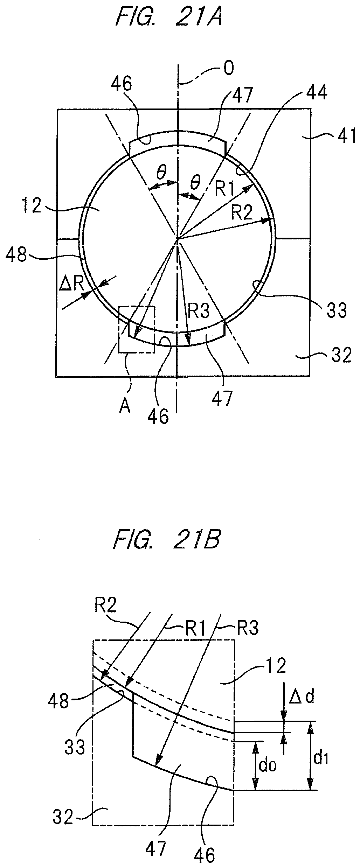

FIG 21(A) is a sectional view showing an end portion of one of the electric storage cells incorporated in the unit case, and FIG. 21(B) is an enlarged sectional view of an A portion in FIG 21(A). The electric storage cells 12 clamped between the cell holder 32 of the bottom cap 21 and the cell holder 41 of the mid frame 22 is shown in FIG 21, and hatching is omitted in Figure. Holding grooves 46 are exposed from the concave surfaces 33 and 44, and formed in bottom portions of the respective concave surfaces 34 and 44. Elastic members 47 each made of a soft resin, rubber, or the like are inserted into the holding grooves 46. Surfaces of the elastic members 47 protrude more radially and inwardly than the concave surfaces 33 and 44. Accordingly, when the cell holder 32 and the cell holder 44 are abutted by positioning the electric storage cells 12 between the concave surface 33 of the cell holder 32 and the concave surface 44 of the cell holder 41, the elastic members 47 are radially contracted and deformed, and the electric storage cells 12 are held in the unit case. More specifically, the electric storage cells 12 are clamped and held radially from the both sides by a pair of elastic members 47 opposing to each other up and down. At this time, the contracted and deformed elastic members 47 tightly adhere to outer peripheral surfaces of the electric storage cells 12 by an elastic restoring force. The above pair of elastic members 47 as one set use at least two sets or more with respect to one cell to clamp the cell.

If it is assume that a radius of the electric storage cell 12 is "R1" and radiuses of the concave surfaces 33 and 44 are "R2", the radiuses R2 of the concave surfaces 33 and 44 are set to be larger than the radius R1 of the electric storage cell 12, and a gap 48 having a radius "ΔR" is formed between the concave surfaces 33 and 44 and the outer peripheral surface of the electric storage cell 12. If it is assumed that a radius of the holding groove 46 is "R3", a depth d0 of the holding groove 46 meets "d0 = R3 - R2". If it is assumed that an initial width before the contraction and deformation of the elastic member 47 is "d1", a deformation amount, namely, a collapse amount of the elastic member 47 becomes approximately Δd. The same elastic member 47 is provided also on other concave surfaces 37 and 45. For example, if it is assumed that the initial width d1 of the elastic member 47 is 2.6 mm and the depth d0 is 2.2 mm, the collapse amount Δd becomes 0.2 mm. If it is assumed that a compression rate k is equal to a ratio obtained by dividing the collapse amount Δd by the initial width d1, the compression rate k = 100 × Δd / d1 = 100 × 0.2 / 2.6 = 7.7 %. The initial width d1 and the collapse amount Δd of the elastic member 47 may be preferably selected so that the compression rate k is within a range of about 5 to 15 %.

As shown in FIG 21, a vertical line, which is orthogonal to a center line of the electric storage cells as adjacent to each other up and down and which crosses up and down the center line of the electric storage cells 12 adjacent to each other up and down, is set as a reference line O. Each of the elastic members 47 extends circumferentially within a range of an angle θ in right and left directions of FIG 21(A) about the reference line O. In the present embodiment, the angle θ is set to about 30 degrees. That is, in the present embodiment, each of the elastic members 47 extends within a range of 30 degrees in the right and left directions from the reference line O. Since the electric storage cell 12 is clamped between the concave surfaces 33 and 44 via the elastic member 47, alignment positioning of the electric storage cell 12 is achieved, and simultaneously the concave surfaces do not contact directly with the outer peripheral surface of the electric storage cell 12. For this reason, even if there are machining errors in the bottom cap 21 made of a hard resin, the mid frame 22, and the like, those are prevented from biting into the electric storage cell 12, damages of the electric storage cell 12 due to the bite are prevented, and the reliability of the electric storage unit 10 can be enhanced.

In addition thereto, since the elastic members 47 adhere tightly to the outer peripheral surface of the electric storage cell 12, the heat dissipation of the electric storage cell 12 can be enhanced. If the elastic members 47 are circumferentially interposed between the electric storage cell 12 and the concave surface within a given range, a gap 48 is formed between the concave surfaces 33 and 44 and the outer peripheral surface of the electric storage cell 12, so that cooling of the electric storage cell 12 and the elastic members 47 is achieved by cold air passing the gap 48, and cooling of parts disposed outside the cell holder 41 at the both end portions is also achieved Therefore, the heat dissipation of the electric storage cell 12 can be improved, and the reliability of the electric storage unit 10 can be enhanced.

When the elastic members 47 are provided in the entire circumferential direction of the concave surfaces, an aligning function of the electric storage cell 12 is enhanced. Meanwhile, when the elastic members 47 are provided partially in a circumferential direction of the concave surfaces, the gap 48 shown in FIG 21 is formed, and the heat dissipation is enhanced. In addition, even when the elastic members 47 are provided in the entire circumferential direction or partially in the circumferential direction of the concave surfaces, each surface of the elastic members 47 tightly adheres to the outer peripheral surface of the electric storage cell 12, so that the electric storage cell 12 is firmly fixed by a moderate force, and a positional deviation of the electric storage cell 12 is prevented. The angle θ shown in FIG 21 is preferably within a range of 15 degrees to 45 degrees. If the angle θ is 15 degrees or more, a contact area of the elastic member 47 contacting with the electric storage cell 12 is increased, so that concern about a move of the electric storage cell 12 from a predetermined positon due to vibration etc. at a time of transportation, earthquake occurrence or the like becomes less. When the electric storage cell is located near a power source of a mobile object, an electric motor in which vibration occurs, or the like, i.e., when further enhancing the reliability to the vibration is required, the angle θ is preferably set near 45 degrees so as to be made a little bigger. In addition, if the angle θ is 45 degrees or lower, an opening portion of the gap 48 having an interval ΔR between the concave surfaces 33 and 44 and the outer peripheral surface of the electric storage cell 12 becomes larger, circulation of discharge gas at an abnormal time of the electric storage cell 12 is made more smoothly. Quality of a material of the elastic member 47 is preferably a silicon rubber, but EPDM or fluorine-based rubber having excellent chemical resistance may be used.

If the elastic members 47 are too soft, the elastic members 47 are elastically deformed in the same direction when any force in the circumferential direction of the cell is applied even after interfaces of the electric storage cell 12 and the elastic members 47 tightly adhere to each other. For this, there is concern about the electric storage 12 rotating in the same direction. Meanwhile, if the elastic member 47 is too hard, the elastic member is difficult to be deformed, and there is concern about a degree of tight adhesion of the electric storage cell 12 and the elastic member 47 in the circumferential direction of the cell being reduced

Whereat, described will be an experimental result made by the present inventors in order to obtain preferable hardness of the elastic member 47. Next table 1 indicates a relation among: hardness of the elastic member 47 made known by this experiment; a fastening torque (T1) of a screw member, and a shear displacement of the elastic member 47. Incidentally, the fastening torque (T1) of the screw member is a fastening torque of the screw member that fastens the mid frame 22 and the top cap 23. If this screw member is fastened thereto, the elastic member 47 is compressed in its thickness direction, and is elastically deformed At this time, if a compression amount (deformation amount) of the elastic member 47 is appropriate, the electric storage cell 12 and the elastic member 47 have necessary and sufficient tight adhesion. In this experiment, their dimensions are the same (thickness: 2. 75 mm; width: 6.2 mm; length: 30.0 mm), while a plurality of elastic members 47 different in hardness have been prepared and a fastening torque (T1) necessary to compress those elastic members and make its thickness 2.4 mm has been measured. Incidentally, when the elastic members 47 are inserted into the holding grooves 46, the elastic member is compressed and its width is made 6.0 mm.

In addition, the shear displacement of the elastic member 47 is an elastic deformation amount in the same direction generated by the elastic member 47 tightly adhering to the electric storage cell 12 when a circumferential force is applied to the electric storage cell 12. As described below, bus bars are fixed by bolts to terminal electrodes of the electric storage cells 12. At this time, a circumferential force is applied to the electric storage cell 12 depending on fastening of the terminal electrodes and the bus bars by the bolts. In this experiment, measured has been the shear displacement (elastic deformation amount) of the elastic member 47 when a fastening torque (T2) of 6 N·m is applied to the bolts fixing the terminal electrodes and the bus bars.
[Table 1]

**TABLE 1**

| RUBBER HARDNESS | FASTENING TORQUE (T1) | SHEAR DISPLACEMENT | DETERMINATION |
|---|---|---|---|
| | (N·m) | (mm) | |
| 20 | 2.10 | 2.51 | × |
| 30 | 2.50 | 1.49 | × |
| 35 | 2.70 | 1.15 | × |
| 40 | 2.90 | 0.89 | ○ |
| 45 | 3.00 | 0.68 | ○ |
| 50 | 3.30 | 0.53 | ⊚ |
| 55 | 3.80 | 0.41 | ⊚ |
| 60 | 4.00 | 0.31 | ○ |
| 65 | 4.90 | 0.24 | ○ |
| 70 | 5.10 | 0.19 | × |
| 75 | 7.20 | 0.14 | × |
| 80 | 8.10 | 0.11 | × |

It is understood from Table 1 that: when the hardness of the elastic member 47 is within a range from 40 or more to 65 or less, the width of the elastic member 47 is compressed to 2.4 mm by the fastening torque (T1) of 5 N·m or less; and simultaneously the shear displacement of the elastic member 47 is suppressed to 1.0 mm or less even if a fastening torque (T2) of 6 N·m is applied.

The optimum fastening torque (T1) is different by a kind of screw members. But, for example, when a screw member whose optimum fastening torque (T1) is 6 N·m is used, the elastic member 47 having a hardness of 50 to 55 is preferably used. This is for the reason that the elastic member having a hardness of 50 to 55 is compressed to 2.4 mm by a fastening torque (T1) of 3.0 to 3.3 N·m having a sufficient surplus with respect to the optimum fastening torque (6 N·m), and hardly makes shear placement even if the fastening torque (T2) of 6 N·m is applied.

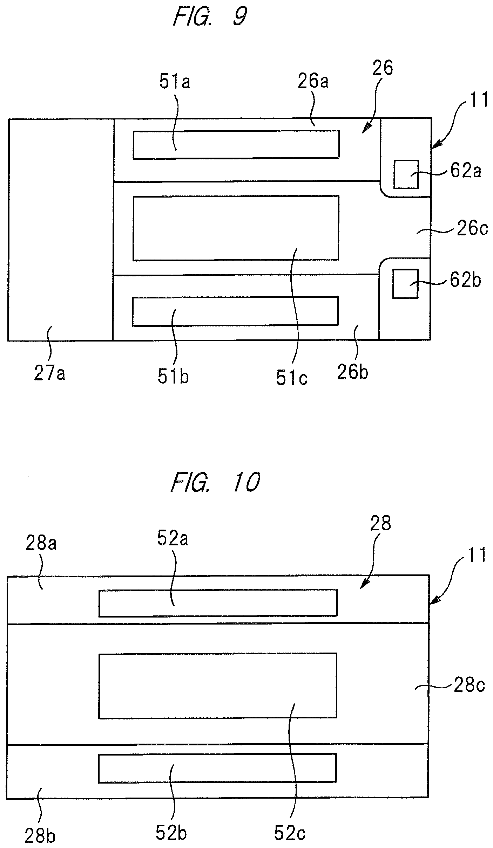

As shown in FIGS. 1 and 9, a cold-air inflow port 51a is provided in the vent frame 26a configuring the front plate 26, a cold-air inflow port 51b is provided in the vent frame 26b, and a cold-air inflow port 51c is provided in the vent frame 26c. Meanwhile, as shown in FIGS. 2 and 10, a cold-air outflow port 52a is provided in a vent fame 28a configuring the back surface plate 28, a cold-air outflow port 52b is provided in a vent frame 28b, and a cold-air outflow port 52c is provided in the vent frame 28c.

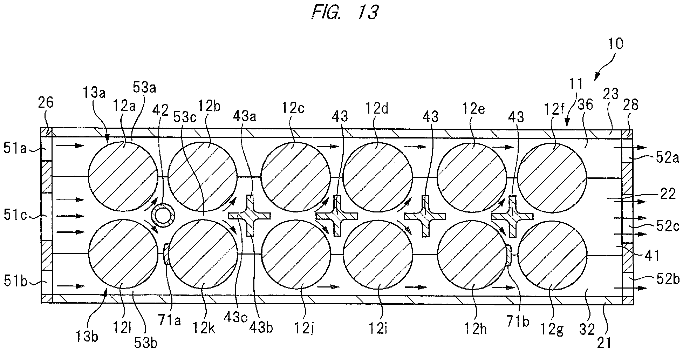

As shown in FIG 13, an upside cold-air path 53a is formed between the top cap 23 and the upside electric storage cell group 13a, and a downside cold-air path 53b is formed between the bottom cap 21 and the downside electrode storage cell group 13b. Further, a middle cold-air path 53c is formed between the upside electrode storage cell group 13a and the downside electrode storage cell group 13b. The cold-air inflow port 51a and the cold-air outflow port 52a oppose the cold-air path 53a, the cold-air inflow port 51b and the cold-air outflow port 52b oppose the cold-air path 53b, and the cold-air inflow port 51c and the cold-air outflow port 52c oppose the cold-air path 53c. Opening areas of the upper and lower cold-air inflow ports 51a and 51b are set to be almost the same as those of the upper and lower cold-air outflow ports 52a and 52b. Dimensions in upper and lower directions of the center cold-air inflow port 51c are set to be longer than those of each of the cold-air inflow ports 51 a and 51b, and the center cold-air inflow port 51c is set to be larger in opening area than the upper and lower cold-air inflow ports 51a and 51b, the opening area becoming about twice larger. Similarly, the center cold-air outflow port 52c is also set to be larger twice in opening area than the cold-air outflow ports 52a and 52b.

The wiring guide tube 42 is arranged in a space formed between the four electric storage cells 12a, 12b, 121 and 12k on their front sides, and further four air guides 43 are arranged in four spaces formed among the respective four electrode storage cells 12 on a downstream side therefrom.

When the electric storage unit 10 is arranged on the electric storage rack, the cooling air generated in the electric storage rack flows from the cold-air inflow ports 51a, 51b, and 51c formed in the front plate 26 to an interior of the unit case 11. The cooling air flowing from the center cold-air inflow port 51c passes the cold-air path 53 between the upper and lower two electric storage cells on the most upstream side, and collides with the wiring guide tube 42. A part of the colliding cooling air is divided up and down into two, and flows in a gap between the two electric storage cells 12a and 12b and a gap between the two electric storage cells 121 and 12k. The up divided cooling air flows from the cold-air inflow port 51a to collide with the cooling air flowing in the cold-air path 53b along an interior surface of the top cap 23, and flows along the back side of the electric storage cell 12a and along the front side of the electric storage cell 12b to cool the respective electric storage cells. Similarly, the down divided cooling air flows from the cold-air inflow port 51b to collide with the cooling air flowing in the cold-air path 53b along an interior surface of the bottom cop 21, and flows out along the back side of the electric storage cell 121 and along the front side of the electric storage cell 12k to cool the respective electric storage cells. Like this, the wiring guide tube 42 has a function as an air guide for dividing cooling air up and down, and the wiring guide tube 42 is also cooled by the cooling air.

The cooling air passing the cold-air path 53c between the two up and down electric storage cells 12b and 12k collides with the air guide 43. The air guide 43, whose transverse section is a cross shape, has: a upper protrusion portion 43a protruding upward; a lower protrusion portion 43b protruding downward; and a horizontal protrusion portion 43c protruding horizontally toward a upstream side. Accordingly, a part of the cooling air colliding with the air guide 43 on the most upstream side is divided up and down by two, and flows in a gap between the two electric storage cells 12b and 12c, and a gap between the two electric storage cells 12k and 12j. The upward divided cooling air collides with the cooling air flowing along the interior surface of the top cap 23, and flows along the back surface side of the electric storage cell 12b and the front side of the electric storage cell 12c to cool the respective electric storage cells. Similarly, the upward divided cooling air collides with the cooling air flowing along the interior surface of the bottom cap 21, and flows along the back surface side of the electric storage cell 12k and the front side of the electric storage cell 12j to cool the respective electric storage cells. Also regarding other three air guides 43 on a downstream side, the cooling air is similarly divided, and the electric storage cells are surely cooled. Like this, since the cooling air is guided to the outer peripheral surfaces of the electric storage cells 12, and the electric storage cells 12 can be surely cooled, durability and reliability of the electric storage cells 12 can be enhanced.

An opening area of the middle cold-air inflow port 51c is set to be larger than those of the up and downside cold-air inflow ports 51a and 51b, so that the cooling air flowing between the upside electric storage cell group 13a and the downside electric storage cell group 13b is narrowed down through the gap between the up and down electric storage cells narrower than an embodiment in which the opening area of the middle cold-air inflow port 51 c is set to be the same as those of the up and down cold-air inflow ports 51a and 51b, and that its flow rate is enhanced in comparison with those of the cooling air flowing in the cold-air path 53a along the top cap 23 and the cooling air flowing in the cold-air path 53b along the bottom cap 21. By this, the cooling air different in flow rate is mixed in the cooling air flowing in the unit case 11, and the cooling air is automatically agitated and mixed, so that a cooling effect of the electric storage cell 12 is enhanced. Since the cold-air outflow ports 52a to 52c are also set to have the opening areas corresponding to those of the cold-air inflow ports 51a to 51c, the cooling air is agitated, so that the cooling effect of the electric storage 12 can be enhanced.

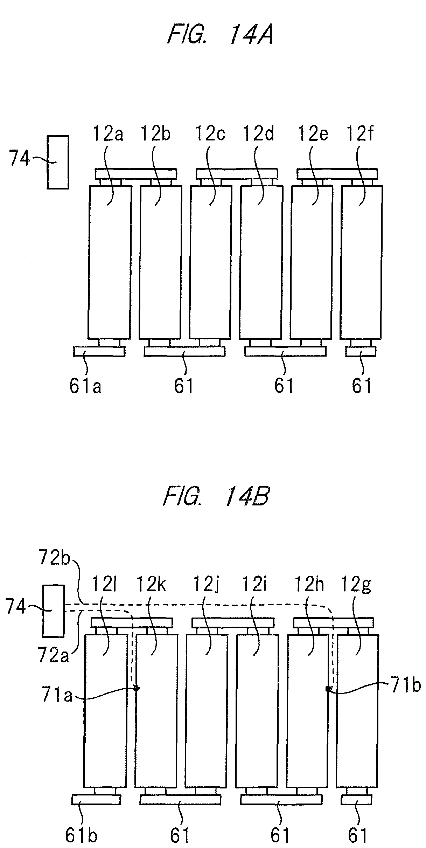

Provided on both end surfaces of the electric storage cell 12 are the terminal electrodes, and the electric storage cells 12 configuring the electric storage cell group 13 are connected in series. In order to connect them in series, the terminal electrodes of both ends of each of the electric storage cells 12 adjacent to each other in a horizontal direction have mutually reverse polarities, and the terminal electrodes of both ends of each of the electric storage cells 12 adjacent to each other up and down also have mutually reverse polarities. As shown in FIGS.11 and 14, if the terminal electrode on a right end surface of the electric storage cell 12a arranged on the front side of the upside electric storage cell group 13a is a positive side, a bus bar 61a of a positive terminal of the electric storage unit 10 is attached to the terminal electrode, and a bus bar 61b of a negative terminal of the electric storage unit 10 is attached to the terminal electrode of the downside electric storage cell 121. The other electric storage cells are connected in series between those electric storage cells 12a and 121, and a middle bus bar 61 is attached to the terminal electrodes of the electric storage cells 12 adjacent to each other. In the electric storage unit 10 having a total of twelve electric storage cells 12, a total of thirteen bus bars are provided including the eleven middle bus bars 61, and the positive and negative bus bars 61a and 61 b.

As shown in FIG 1, provided on a front end surface of the side plate 24 are an opening portion 62a from which the bus bar 61a protrudes and an opening portion 62b from which the bus bar 61b protrudes. The plurality of electric storage units 10 are arranged in the electric storage rack, and when the electric storage unit 10 is connected electrically, the bus bars 61a and 61b protruding from the opening portions 62a and 62b are connected to the bus bars of the other electric storage units 10 by a power feeding member.

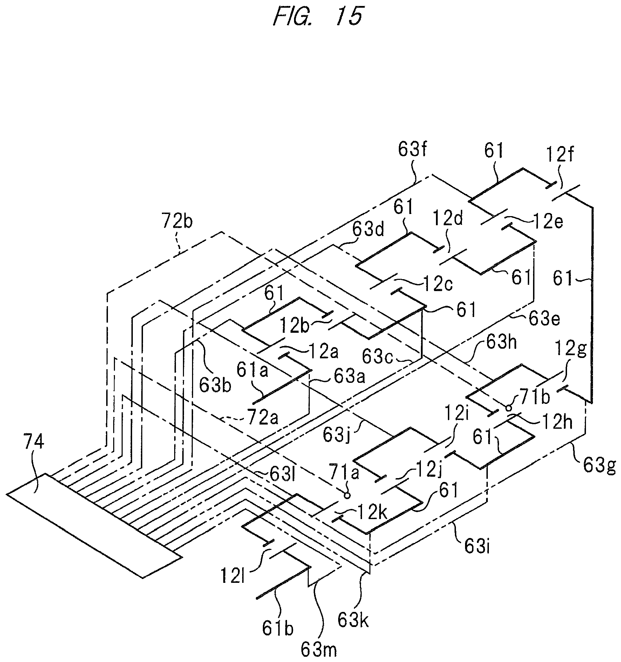

An electric connection state by the bus bars 61, 61a, and 61b of all of the electric storage cells 12 is given by FIG 15 if illustrated. In order to detect whether an output voltage of the electric storage cell 12 is equal to a set value, one end portions of the voltage detection lines 63a to 63m are connected to the respective bus bars. The other end portions of the respective voltage detection lines 63a to 63m are connected to a controller (control unit) 74 on a control substrate in the control box 27. Namely, the one end portions of the plurality of the voltage detection lines (a plurality of wirings) 63a to 63m detecting the respective output voltages of the plurality of electric storage cells 12 are connected to the bus bars corresponding to the plural respective electric storage cells 12, while the other end portions of the plural voltage detection lines 63a to 63m are connected to the controller.

As shown in FIG 5, a plurality of support protrusions (protrusions) 64 are provided on exterior surfaces of the two cell holders corresponding to the both end portions of the electric storage cell 12 so as to protrude outward, and horizontal slits 65 into which the wirings are inserted are provided in the respective support protrusions 64. The respective support protrusions 64 almost correspond to positions of the air guides 43. That is, in each of the two cell holders 41, the plurality of support protrusions 64 are provided at positions between the upside electric storage cell group 13a and the downside electric storage cell group 13b within regions among the four electric storage cells 12 adjacent to each other forth and back and adjacent to each other up and down. As shown in FIG 5, out of the two cell holders 41, the up and down slits 66 are provided in the support protrusion 64 on a left side when viewed from a front, namely, in the support protrusion 64 of the cell holder 41 on the control box 27 side.

FIG 16 shows the voltage detection lines connected to the right bus bar of the electric storage cell groups 13. The two voltage detection lines 63a and 63m connected to the front-side electric storage cells 12a and 121, and the voltage detection line 63k connected to the electric storage cell 12k adjacent to the electric storage cell 121 on the back side are inserted directly into the wiring guide tube 43 and connected to the controller 74 in the control box 27. The other four voltage detection lines 63c, 63e, 63g, and 63i extend, along the end surfaces of the electric storage cell group 13, longer than the other three voltage detection lines 63a, 63k, and 63m, and are inserted into the slits 65 of the respective support protrusions 64 to be held in the cell holder 64.

Since the horizontal slits 65 are provided in the plurality of support protrusions 64, the voltage detection line connected via the bus bar to the electric storage cell 12 of the upside electric storage cell group 13a, and the voltage detection line connected via the bus bar to the electric storage cell 12 of the downside electric storage cell group 13b are joined near the support protrusion 64, are inserted together into the slit 65, and can be held by the support protrusion 64. Further, since the horizontal slit 65 and the up and down slits 66 are provided in the support protrusions 64, the voltage detection lines drawn from a plurality of directions are joined and can be held in the support protrusions 64 each having the up and down slits 66, and simultaneously those voltage detection lines can be sent directly under the same support protrusions 64. In addition, in the support protrusions 64 each having the up and down slits 66, a direction of sending the voltage detection lines can be also divided by a plurality of directions as the need arises. As describe above, a degree of freedom of drawing-around of the voltage detection lines can be increased.

FIG 17 shows the voltage detection lines connected to the left bus bars of the electric storage cell group 13. As shown in FIG 17, the seven voltage detection lines connected to the right bus bars shown in FIG 16 are derived sequentially from the wiring guide tube 42, are held by the slits 65 and 66, and extend up to the control box 27. The two voltage detection lines 631 and 63j connected to the left bus bar are connected directly to the controller 74 in the control box 27 without being held by the protrusions 64. The other four voltage detection lines 63b, 63d, 63f, and 63h extend, along the end surface of the electric storage cell group 13, longer than the two voltage detection lines 631 and 63j, and are inserted into the respective support protrusions 64 and held by the cell holder 41.

As described above, the plurality of voltage detection lines (wirings) arranged outside the cell holder 41 (cell holder 41a) arranged at the furthest positions from the controller 74 are derived sequentially from outside the cell holder 41 (cell holder 41b) arranged at positions nearest to the controller 74 passing (via) the wiring guide tube 42, are joined to the other plural voltage detection lines thereat, and are connected to the controller 74 in such a state that all of the plurality of voltage detection lines are not dispersed but gathered. Therefore, the plurality of voltage detection lines can be derived sequentially from outside the opposite cell holder 41 (cell holder 41b) by passing an interior of the wiring guide tube 42, and the wirings can be derived sequentially from an opposite side without dispersing the wirings.

Like this, the wirings as the voltage detection lines creeping inside the respective side plates 24 and 25 and extending along the end surface of the electric storage cell group 13 are held by the support protrusions 64, and are fixed between the bus bars of the upside electric storage cell group 13a and the downside electric storage cell group 13b, and so are not displaced by the cooling air flowing in the unit case 11, vibration, or the like. Therefore, the voltage detection lines can be prevented from contacting with the electric storage cells 12. In addition, even if the fastening bolts loosen between the upper-stage electric storage cell 12 and the bus bars and one of the fastened portions is released, the voltage detection lines can be prevented from hanging down the bus bar by the support protrusions 64, and an electrical short circuit(s) among the lower-stage electric storage cells 12 and the voltage detection lines can be prevented. A width of the support protrusion is set at 3 mm. When the width of the support protrusion 64 is 1 mm or more, this is preferable for causing no cracking and breaking even if the voltage detection lines hit the support protrusions 64 due to hanging-down of the bus bar(s). In addition, a gap between a tip of the support protrusion 64 and an interior surface of the side plate 24 is 5 mm or lower, and so the voltage detection line(s) is not released from the slits 65 and 66 even if displaced due to vibration etc. A sectional shape of the support protrusion 64 is set to be rectangular, but may be a shape formed by a circular arc, an L shape, or a crisscross shape. Therefore, durability and reliability of the electric storage unit 10 can be enhanced.

In addition, as shown in FIGS. 16 and 17, in a side view (an eyesight viewed from a side-surface direction) in which the side plates 24 and 25 of the electric storage unit 10 are released, each of the plurality of support protrusions 64 is provided at such a position as not to overlap each of the plurality of bus bars. By this, each of the plurality of voltage detection lines can be drawn around so as not to overlap each of the plurality of bus bars, and the damages due to the contacts with the bus bars by the voltage detection lines can be reduced.

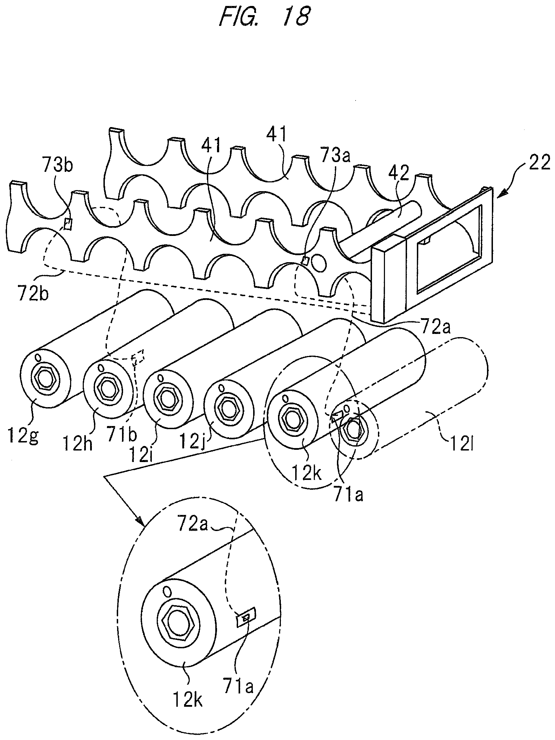

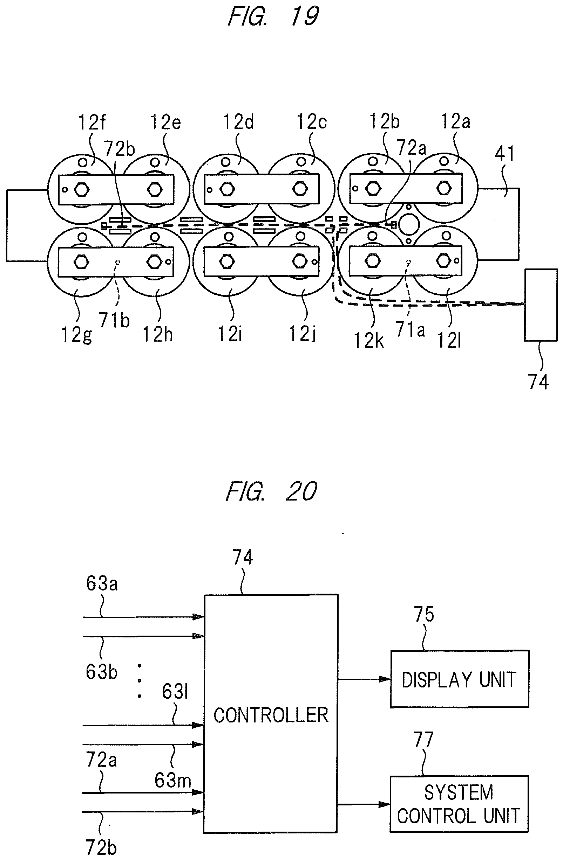

In order to detect temperatures of the electric storage cells 12, a thermistor as a temperature detection sensor is attached to the electric storage cell 12. A platinum temperature measuring resistor or a linear resistor other than the thermistor may be used. FIG 18 is a sectional view showing temperature detection sensors 71a and 71b, and temperature detection lines 72a and 72b from each of the temperature detection sensors 71a and 71b, and FIG 19 is a front view of the mid frame showing such a state that the temperature detection lines are attached to the mid frame. In FIG 19, the voltage detection lines are omitted when illustrated.

As shown in FIGS. 18 and 19, the temperature detection sensor 71a is attached to the front side of the second electric storage cell 12k from the front side of the electric storage unit 10, namely, from an upstream side of the cooling air. Meanwhile, the temperature detection sensor 71b is attached to the back side of the second electric storage cell 12h from its back side, namely, from a downstream side of the cooling air.

The temperature detection sensors 71a and 71b are connected to the control box 27 via their respective temperature detection lines 72a and 72b.

A method of attaching the temperature detection sensors 71a and 71b is not limited. For example, however, as shown in FIG 18, they are attached to curbed side surfaces of the cylindrical electric storage cells 12k and 12h by using an adhesive film adhesive, or the like. In addition, attachment positions of the temperature detection sensors 71a and 71b are each between a center portion and an end portion of each curved side surface of the electric storage cells 12k and 12h and on the side plate 25 side (end portion side). That is, they are each arranged inside the cell holder 41 on the control box 27 side.

As shown in FIG 18, the respective temperature detection lines 72a and 72b pass through holes 73a and 73b provided in the cell holder 41, are derived from outside the cell holder 41, and extend up to the control box 27. In addition, the temperature detection lines 72a and 72b passing the through holes 73a and 73b and derived from outside the cell holder 41 are held by the support protrusions 64 similarly to the above voltage detection lines. That is, the temperature detection lines 72a and 72b are held by the support protrusion 64 on the exterior surface of the cell holder 51 on the side plate 25 side out of the two cell holders 41 corresponding to the both end portions of the electric storage cell 12. This support protrusion 64 is provided horizontally with a slit, and since the temperature detection lines 72a and 72b are inserted into the slits 65, the temperature detection lines 72a and 72b are held by the cell holder 41.

Like this, since the temperature detection sensors 71a and 71b are provided on the control box 72 side in comparison with where provided on a side opposite to the control box 27, lengths of the temperature detection lines 72a and 72b can be shortened. In addition, since the temperature detection sensors 71a and 71 b are arranged on the curved side surfaces of the electric storage cells 12k and 12h, adhesive areas can be widely ensured, and the temperature detection sensors 71a and 71b can be tightly fixed. Further, since the temperature detection sensor 71b is provided on the side plate 25 side (end portion side) having the curved side surface in the electric storage cell 12h, a temperature on the end portion side, which becomes more easily high temperature than the center portion, is measured, and this can be made useful to temperature management. Furthermore, since the temperature detection lines 72a and 72b pass the through holes 73a and 73b provided in the cell holder 41, are derived from outside the cell holder 41, and are held by the support protrusion 64 outside the cell holder 41, the temperature detection lines can be from contacting with the electric storage cell 12 without displacement due to cooling air, vibration, or the like. Therefore, reliability of the electric storage unit 10 can be enhanced.

Since the electric storage cells 12 are cooled by the cooling air flowing in the unit case 11, the electric storage cell 12 has excessively no temperature rise. There is a tendency to make the electric storage cell 12 on the upstream side of the cooling air lower than the electric storage cell 12 on the downstream side thereof regarding the temperature of the electric storage cell 12 arranged in the unit case 11. The temperature detection sensors may be attached to all of the electric storage cells 12. Instead of such a configuration, however, if the temperatures of the two electric storage cells 12 on the upstream and downstream sides are detected, the temperature management about all of the electric storage cells 12 configuring the electric storage cell group 13 can be made based on the temperature of the electric storage cell 12 on a high-temperature side and the temperature of the electric storage cell 12 on a low-temperature side. For example, an average temperature of all of the electric storage cells 12 is calculated by an arithmetic processing of the temperatures about the two electric storage cells 12 on the upstream and downstream sides, and so this can be made useful to the temperature management.

Like this, since the temperatures about at least two electric storage cells 12 on the high-temperature and low-temperature sides are detected, the temperature management such as the detection of the average temperature of the electric storage cells 12 in the electric storage unit 10 can be made. In addition, since how a temperature difference among the respective cells occurs is previously known by a model case(s) if the temperatures at two locations on the high-temperature side and the low-temperature side are obtained by an amount of the cooling air flowing in the unit case 11 or by an environmental temperature, collation with their temperature distribution data can be made useful to their abnormality detection even when the cell(s) other than the cells detecting their temperatures become abnormally a high temperature.

According to study of the present inventors, when the temperatures about all of the electric storage cells 12 are monitored, it has become clear that the front side of the second electric storage cell 12k from the upstream side out of the downside electric storage cell group 13b has the lowest temperature rise, and that the back side of the second electric storage cell 12h from the downstream side of the electric storage cell group 13b has the highest temperature rise. For this reason, as shown in FIGS. 13, 18, and 19, the temperature of the electric storage cell 12k to become the lowest temperature is detected by attaching the temperature detection sensor 71a to the front side of the electric storage cell 12k, and the temperature of the electric storage cell 12h to become the highest temperature is detected by attaching the temperature detection sensor 71b to the back side of the electric storage cell 12h. Incidentally, here, from a monitor result, the temperature of the second electric storage cell 12k from the upstream side out of the downside electric storage cell group 13b is used as the temperature of the low-temperature-side electric storage cell, and the temperature of the second electric storage cell 12h from the downstream side is used as the temperature of the high-temperature-side electric storage cell. However, the present invention is not limited thereto. For example, the temperature about any of the four electric storage cells 12a, 12b, 121, and 12k on the upstream side may be used as the temperature of the low-temperature-side electric storage cell, and the temperature about the four electric storage cells 12e,12f, 12g, and 12h on the downstream side may be used as the temperature of the high-temperature-side electric storage cell. In addition, the upstream-side or downstream-side electric storage cell may be selected by regarding the center portion of the unit case 11 (case body 11 a) as a reference. That is, the temperature detection sensor may be attached, as the temperature of the low-temperature-side electric storage cell, to any of the electric storage cell (12a, 12b, 12c, 12l, 12k, and 12j in FIG 13) selected from the electric storage cell group arranged on the front plate 26 side rather than the center portion of the unit case 11 (case body 11a), and the temperature detection sensor is attached, as the temperature of the high-temperature-side electric storage cell, to any of an electric storage cell (12d, 12e, 12f, 12g, 12h, and 12i in FIG 13) arranged on a side opposite to the front plate 26 rather than the center portion of the unit case 11 (case body 11 a). Like this, a combination of the electric storage cells that detect the temperature(s) can be appropriately changed.

FIG 20 is a block diagram showing a control circuit connected by the voltage detection lines and the temperature detection lines, and the voltage detection lines 63a to 63m are respectively connected to the controller 74. The controller 74 is provided on a control substrate incorporated in the control box 27. The controller 74 calculates a potential difference between a positive-side terminal and a negative-side terminal of each of the electric storage cells 12 based on detection signals from the voltage detection lines 63a to 63m. In addition, the respective temperature detection lines 72a and 72b are also connected to the controller 74. The controller 74 calculates the temperatures of the two electric storage cells 12 based on detection signals from the temperature detection lines 72a and 72b.

Signals about the respective calculation results are transmitted to an outside display unit 75, and voltage values and temperature values of the electric storage cells 12 are displayed in the display unit 75. As display forms of the voltage values, the voltage values of all of the electric storage cells 12 can be displayed, and/or the electric storage cells having the highest voltage and the lowest voltage can be displayed. In addition, as display forms of the temperatures, the detection temperatures of the two electric storage cells can be displayed, the above average temperature can be displayed, and/or alarm or warning for informing someone of abnormality can be displayed, its display can be flashed, and/or a warning sound can be sounded. Further, when the average temperature of the electric storage cells 12 becomes higher than a predetermined temperature, an amount of cooling air is increased to fall the temperatures of the electric storage cells 12, and when the average temperature is lower than the predetermined temperature, the amount of cooling air is decreased Thus, power consumption of a cooling fan(s) can be reduced Furthermore, when the temperature of any one of the two electric storage cells becomes higher than the predetermined temperature, a notice can be given by the warning sound, the flashing, or the like, or a main circuit can be broken by recognizing the temperature abnormality to communicate an abnormality signal(s) to a system control unit 77. Moreover, when the voltage value of the electric storage cell 12 is higher or lower than the predetermined voltage value, a notice is given by the warning sound, the flashing, or the like, or the abnormality signal is communicated to the system control unit 77, and thereby the main circuit can be broken. Furthermore, lifetimes of the electric storage cells are estimated from a temporal change in the voltage values of the electric storage cells 12, a notice is given by the warning sound, the flashing, or the like, or the abnormality signal is communicated to the system control unit 77, and thereby the main circuit can be broken. In addition, when the displacement of the voltage values among the respective cells of the electric storage cells 12 exceeds a predetermined voltage displacement, a predetermined signal(s) is communicated to the system control unit 77, and thereby charging and discharging operations can be performed so as to fall within a range of predetermined voltage values.

Liquid or gelatinous electrolyte is enclosed inside a lithium-ion secondary battery as the electric storage cell 12. When the temperature of the electric storage cell 12 exceeds a range of a steady temperature and rises too much, it is supposed that an internal pressure of the electric storage cell 12 exceeds a predetermined pressure (second predetermined pressure). Therefore, if the internal pressure exceeds this predetermine pressure, safety valves 76 as shown in FIGS. 16 and 17 are provided in the both end surfaces of the electric storage cell 12 in order to exhaust a gas in the electric storage cell 12 outside. This predetermined pressure is a pressure for operating the safety valves 76 of the electric storage cells 12. If the internal pressure of the electric storage cell 12 is increased depending on a rise of the internal temperature of the electric storage cell 12 and reaches a second predetermined pressure, namely, an operation pressure, the safety valves 76 are opened. The respective safety valves 76 are provided on the both end surfaces of the electric storage cell 12. Accordingly, even if the safety valves 76 are operated, namely, opened, and gasified contents are exhausted outside, the exhausted gas is blown to the interior surfaces of the side plates 24 and 25, and cannot damage the other electric storage cells 12 in the unit case 11.

If the safety valves 76 are operated, the exhausted gas is ejected from the electric storage cell 12 to an inside of the unit case 11, and the internal pressure in the unit case 11 rises instantaneously suddenly. If the unit case 11 is broken by the suddenly rising internal pressure, there is a fear of breaking parts of the controller, and the wirings, etc. depending on broken locations. Therefore, if the safety valves 76 are operated, a specific location(s) in the unit case 11 are set so as to be positively broken. In the present embodiment, the specific location between a longitudinal center of the unit case 11 and the back surface of the unit case 11 is set so as to positively broken.

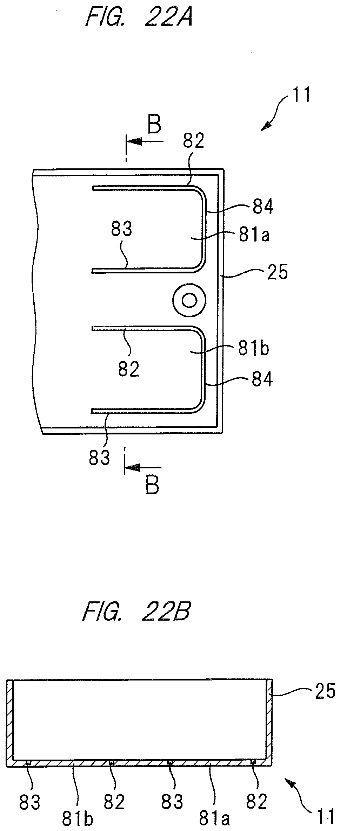

FIG 22(A) is an enlarged front view showing a back end portion of the side plate 25, and FIG 22(B) is a sectional view taken along B-B lines of FIG 22(A).

Two pressure break portions 81a and 81b are provided up and down in an interior surface of a back end portion of the side plate 25. The respective pressure break portions 81a and 81b are partitioned by: two parallel grooves 82 and 83 that are mutually in parallel and extend forth and back, namely, in an opposite direction to the front plate 26 and the back plate 28; and communication grooves 84 that are mutually communicated with one end portions of the both parallel grooves 82 and 83 (mutual end portions on the back plate sides in the present embodiment), and each become a tongue piece shape. In a below description, end portions on back plate sides of the parallel grooves 82 and 83 may be called back end portion, and end portions on front plate sides thereof may be called front end portions. The pressure break portions 81a and 81 b partitioned by the three side grooves each includes a base portion that has the same width as the side plate 25 and is continuous with the side plate 25. FIG 22 shows the pressure break portions provided in the side plate 25, but the pressure break portions are provided correspondingly to the other side plate 24. The pressure break portions 81a and 81b and the safety valves 76 (not shown in FIG 22) are placed so as to oppose the longitudinal direction (axial direction) of the electric storage cell 12. Thus, since a part(s) having a weak strength is placed close at hand so as to be oppose the safety valve 76, the pressure break portions 81a and 81b are opened quickly depending on the momentary internal pressure rise due to the exhausted gas from the safety valves 76, and thereby the entire damages of the unit case 11 can be prevented. As shown in FIGS. 16 and 17, since the safety valves 76 are provided on both of the axial end surfaces in the electric storage cell 12, the pressure break portions are also provided on the both side plates 24 and 25 of the unit case 11 so as to oppose the safety valves. When the safety valve 67 of the electric storage cell 12 is located at one position of the one end surface, however, the pressure break portion may be provided only in the side plate corresponding thereto.

A thickness between each bottom surface of the parallel grooves 82 and 83 and the communication groove 84 and an exterior surface of the side plate 25 is thinner than those of the other locations of the side plate 25. If the safety valve 67 is operated to exhaust the gas into the unit case 11 and the pressure in the unit case 11 is higher than the predetermined pressure (first predetermined pressure), the pressure break portions 81a and 81 b are broken at their groove portions by a gas pressure. The first predetermined pressure is a pressure for causing the pressure break portions 81a and 81b to open. When the internal pressure in the unit case 11 rises and reaches the first predetermined pressure, namely, a burst pressure, the pressure break portions 81a and 81b are broken. In other words, the first predetermined pressure, namely, the burst pressure is a force that affects the pressure break portions 81a and 81b depending on the internal pressure rise of the unit case 11 and bends the pressure break portions 81a and 18b outside the unit case 11. At least any of the tongue-piece-shape pressure break portions is broken at its groove portion, and a communication hole for gas exhaust is formed in the side plate. Even if the pressure break portions 81a and 81b are broken, base portions of the pressure break portions 81a and 81b are not separated from the side plates 24 and 25, and the pressure break portions 81 a and 81b are prevented from being scattered outside. Further, when the groove portions configuring the pressure break portions 81a and 81b are broken, the pressure break portions 81a and 81b are bent so that end portions (free ends) opposite to the base portions roll outwardly by regarding the base portions as fixed portions. For this, the gas exhausted into the unit case 11 is guided by the pressure break portions 81a and 81b, and is ejected in a back direction of the unit case 11. The parallel grooves 82 and 83 of the pressure break portions 81a and 81b each have such a shape that a depth of the groove becomes gradually large from the front end portion to the back end portion. The communication groove 84 has the deepest groove in each of the pressure break portions 81a and 81 b. The thinnest thickness among the bottom surfaces of the parallel grooves 82 and 83 of the pressure break portions 81a and 81b, the bottom surfaces of the communication grooves, and the exterior surface of the side plate 25 has been set to be 25 % of the thickness of the side plate 25. The grooves of the pressure break portions 81a and 81b are provided on the electric storage 12 side (inside the side plates 24 and 25), but may be provided outside the side plates 24 and 25.

Positions of providing the pressure break portions 81a and 81b are not limited to the back surface side of the unit case 11. However, if those pressure voltage portions 81a and 81b are broken when the pressure break portions 81a and 81b are provided at positions separate from the front of the unit case 11 to which the control box 27 is provided, the control circuit of the controller 74 in the control box 27 is prevented from being damaged. Like this, even if the safety valves 76 of the electric storage cells 12 are operated, a unintended location(s) of the electric storage unit 10 is prevented from be broken, and so a chain of abnormalities due to the operation of the safety valve 76 can be prevented from occurring. Therefore, the reliability of the electric storage unit 10 can be enhanced.

Forms of the pressure break portions 81a and 81b are not limited to a form shown in Figures, and may be also an embodiment of making the tongue-piece-shape pressure break portions 81a and 81b rotate by 90 degrees. In this embodiment, the parallel grooves 82 and 83 extend in a direction opposite to the bottom cap 21 and the top cap 23, and the communication grooves 84 communicate the bottom-cap-side end portions of the parallel grooves 82 and 83 with each other or communicate the top-cap-side end portions with each other. In addition, slits having a thin gap therebetween may be used instead of the parallel grooves 82 and 83 and the communication grooves 74. Further, in the present embodiment, since the electric storage cells are laminated up and down in two-stage, the two pressure break portions 81a and 81b are placed alongside up and down. Therefore, even when the safety valves 76 of the electric storage cells 12 included in the upside electric storage cell group 13a are operated and/or when the safety valves 76 of the electric storage cell 12 included in the downside electric storage cell group 13 is operated, an effect as described above is obtained. When the number of laminated stages of the electric storage cell group 13 is increased or decreased, the number of pressure break portions can be increased or decreased depending thereon.

In addition, as shown in FIGS. 16 and 17, in a side view (an eyesight viewed from a side-surface direction) in which the side plates 24 and 25 of the electric storage unit 10 are released, each of the plurality of voltage detection lines and temperature detection lines is drawn around so as not to overlap each of the plurality of safety valves 76. Therefore, it is possible to reduce respective damages of the plurality of voltage detection lines and temperature detection lines due to an influence on the gas exhaust by the operations of the safety valves 76.

A shape of a wiring guide portion (wiring guide tube 42) is not limited to a cylindrical shape, may be a sectional shape in a direction of crossing a longitudinal direction of the cylindrical shape, for example, may be an L shape, an U shape, or the like, and may be such a shape as to be capable of holding the plurality of wirings.

The present invention is not limited to the above embodiments, and can be modified and varied within a range of not departing from the gist thereof For example, the electric storage unit 10 shown in Figures has twelve electric storage cells 12, but the number of electric storage cells is not limited to twelve and may be any number. In addition, the electric storage cell 12 is a lithium-ion secondary battery, but may be lithium-ion capacitor.

### INDUSTRIAL APPLICABILITY

An electric storage unit is applicable to an electric storage system for storing power and supplying the stored power outside.

## Claims

1. An electric storage unit including a plurality of electric storage cells each having a cylindrical shape, the electric storage unit comprising:
a downside electric storage cell group configured by the plurality of electric storage cells mutually placed in parallel via a gap;
a bottom cap provided with a downside cell holder that holds both end portions of each of the electric storage cells in the downside electric storage cell group;
an upside electric storage cell group configured by the electric storage cells mutually placed in parallel via a gap;
a top cap provided with an upside cell holder that holds both end portions of each of the electric storage cells in the upside electric storage cell group;
a mid frame provided with a middle cell holder that clamps the electric storage cells in the downside electric storage cell group with the downside cell holder and clamps the electric storage cells in the upside electric storage cell group with the upside cell holder; and
a front plate provided at a front of a case body formed by the bottom cap, the top cap, and the mid frame,
wherein the front plate is provided with: a downside cold-air inflow port opposing a downside cold-air path between the bottom cap and the downside electric storage cell group; an upside cold-air inflow port opposing an upside cold-air path between the top can and the upside electric storage cell group; and a middle cold-air inflow port opposing a middle cold-air path between the upside electric storage cell group and the downside electric storage cell group.

2. The electric storage unit according to claim 1,
wherein an opening area of the middle cold-air inflow port is larger than those of the downside and upside cold-air inflow ports.

3. The electric storage unit according to claim 1 or 2,
wherein a back surface of the case body is provided with a back plate, and the back plate is provided with a downside cold-air outflow port opposing the downside cold-air path, an upside cold-air outflow port opposing the upside cold-air path, and a middle cold-air outflow port opposing the middle cold-air path.

4. The electric storage unit according to claim 3,
wherein an opening area of the middle cold-air outflow port is larger than those of the downside and upside cold-air outflow ports.

5. The electric storage unit according to any one of claims 1 to 4, comprising:
an air guide that is provided in the mid frame in a direction of traversing the middle cold-air path and that guides, to the downside cold-air path and the upside cold-air path, cooling air flowing in the middle cold-air path.

6. The electric storage unit according to claim 5,
wherein the air guide is provided in a space among four of the electric storage cells that are adjacent forward and backward and adjacent up and down.

7. The electric storage unit according to claim 5 or 6,
wherein a wiring guide tube, in which a wiring placed in a direction of traversing the cooling air in the case body is accommodated, is the air guide.

8. The electric storage unit according to claim 5 or 6,
wherein the air guide comprises: a protrusion protruding to the downside cold-air path; a protrusion protruding to the upside cold-air path; and a protrusion protruding horizontally on a upstream side of the cooling air.

9. The electric storage unit according to any one of claims 1 to 8,
wherein gaps, which causes the cooling air to flow outside end portions of the electric storage cells, are formed between each of the middle, downside, and upside cell holders and each of the electric storage cells.
